# EUROPÄISCHE PATENTSCHRIFT

(11) **EP 3 311 970 B1**
(45) Veröffentlichungstag und Bekanntmachung des Hinweises auf die Patenterteilung: **21.08.2019**
(21) Anmeldenummer: 17195693.1
(22) Anmeldetag: 10.10.2017
(51) Int. Cl.: B29B 17/00, B29C 64/153, B29C 64/357, B33Y 10/00, B33Y 70/00

(54) **VERFAHREN ZUM HERSTELLEN EINES BAUTEILS MITTELS LASERSINTERNS**
METHOD FOR PRODUCING A COMPONENT BY MEANS OF LASER SINTERING
PROCÉDÉ DESTINÉ À LA FABRICATION D'UN COMPOSANT PAR FRITTAGE SÉLECTIF PAR LASER

(30) Priorität: 11.10.2016 DE 102016219746
(43) Veröffentlichungstag der Anmeldung: 25.04.2018
(73) Patentinhaber: Universität Stuttgart, 70174 Stuttgart (DE)
(72) Erfinder: Bonten, Christian, 47804 Krefeld (DE); Weinmann, Sandra, 70794 Filderstadt (DE)
(74) Vertreter: Altmann Stößel Dick Patentanwälte PartG mbB

(56) Entgegenhaltungen:
- DE-A1- 10 330 590
- DE-A1-102008 024 465

## Beschreibung

Zu den additiven Fertigungsverfahren zählt das selektive Lasersintern. Bei diesem Verfahren wird eine Baufläche sukzessive mit einem bestimmten Kunststoffpulver beschichtet, das unter Einsatz eines Lasers geschmolzen wird. Durch schichtweises Schmelzen und anschließendes Verfestigen des Kunststoffpulvers durch Abkühlen entsteht durch das Übereinanderlegen und Verbinden mehrerer Einzelschichten ein Bauteil. Auf diese Weise lassen sich komplexe Strukturen und dreidimensionale Geometrien realisieren, die in einem Arbeitsschritt und ohne die Verwendung eines Werkzeugs hergestellt werden können. Bei einem Einsatz von Polyamid 12, das als Standardmaterial beim Kunststoff-Lasersintern gilt, liegt die Materialausnutzung in der Bauteilherstellung derzeit jedoch nur bei 20-30 %, da das Kunststoffpulver beim Lasersintern über mehrere Stunden, teilweise sogar über mehrere Tage, auf eine Prozesstemperatur nahe dem Schmelzpunkt des Kunststoffpulvers erwärmt wird, wodurch Materialalterungseffekte hervorgerufen werden. Ein Vergleich von neuem Material (Neupulver) mit Altmaterial (Altpulver) zeigt, dass teilweise schon nach geringer Alterungsdauer eine starke Erhöhung in der Schmelzviskosität und dadurch eine verminderte Fließfähigkeit des Kunststoffs zu beobachten ist. Ausgelöst wird dies durch Nachkondensationsreaktionen des Kunststoffpulvers. Die verminderte Fließfähigkeit des Kunststoffs bewirkt bei einer Wiederverwendung des Altmaterials im Lasersinterprozess eine Verschlechterung der sich einstellenden Bauteilqualität in Verbindung mit dem Auftreten des sogenannten Orangenhaut-Effekts. Zur Vermeidung derartiger Beeinträchtigungen sind üblicherweise Auffrischraten von 50-60 % Neupulver erforderlich. Bei der o. g. Materialausnutzung müssen also 20-40 % des Kunststoffpulvers aufgrund thermischer Alterung verworfen werden.

DE 10 2008 024 465 A1, dass dem Oberbegriff des Anspruchs 1 offenbart, beschreibt eine Lasersintervorrichtung mit einer Prozesskammer und einem darin in vertikaler Richtung bewegbaren Träger, der das zu bildende Objekt trägt und ein Baufeld definiert. Die Vorrichtung weist weiterhin einen Laser auf, der einen Laserstrahl erzeugt, der durch eine Ablenkeinrichtung auf ein Einkoppelfenster gelenkt und von diesem in eine Prozesskammer hindurchgelassen und in einem vorbestimmten Punkt in einer Arbeitsebene fokussiert wird. Außerhalb der Prozesskammer ist eine Vorrichtung zum Behandeln von nichtverfestigtem Altpulver vorgesehen. Diese Vorrichtung weist eine nicht dargestellte Wasserdampferzeugungseinrichtung, eine Heizeinrichtung zum Bringen des Wasserdampfs auf eine vorbestimmte Temperatur und eine Trocknungseinrichtung auf. Bei der Vorrichtung zum Behandeln von Altpulver kann es sich beispielsweise um einen Autoklaven handeln. Dort wird es für etwa 1 bis etwa 48 Stunden bei Temperaturen von mindestens 130 °C und höchstens 10 °C unterhalb des Schmelzpunktes des Pulvers mit Wasserdampf (Hydrolyse) behandelt. Für Polyamid 12 und Polyamid 11 liegt die Behandlung vorzugsweise bei etwa 130°C bis etwa 170°C. Anschließend wird es im Trockenschrank, der Bestandteil der Vorrichtung ist, getrocknet, um das überschüssige, nicht abreagierte Wasser zu entfernen. Das behandelte Altpulver wird sodann für einen erneuten Lasersinterprozess eingesetzt.

WO 2005/097475 A1 beschreibt ein Lasersinterverfahren, bei dem ein spezielles Neupulver mit nicht-reaktiven Endgruppen eingesetzt wird, das nach dem Lasersintern wiederverwendet werden kann. Die Herstellung des speziellen Neupulvers mit nicht-reaktiven Endgruppen erfolgt durch Polymerisation, bevorzugt wird während der Polyamidpolymerisation eine chemische Verbindung zugegeben, die mit einem Teil der reaktiven Endgruppen des Polyamids abreagiert. In einem zusätzlichen Schritt können die bei der Polymerisation entstandenen niedermolekularen Monomere, Oligomere und Verunreinigungen durch Extraktion entfernt werden.

WO 2016/010424 A1 beschreibt ein Verfahren zum Regenerieren von Altpulver in einem Lasersinterprozess. Dabei wird Wasser aus einem Trägermaterial zum Verkürzen der Molekülketten (Hydrolyse) freigesetzt. Bei einer weiteren Ausführungsform wird der Einsatz weiterer Komponenten wie Mono- oder Di-Säuren vorgeschlagen, um die Reaktivität der Endgruppen der Polymerketten und die Molekulargewichtsverteilung zu steuern.

DE 10 2004 047 876 A1 beschreibt einen Lasersinterprozess, bei dem das Neupulver eine Mischung aus disäure- und diamingeregeltem Polyamid und/oder Copolyamid ist. Die Herstellung des geregelten Polyamids und/oder Copolyamids erfolgt vorteilhaft bereits während der Polymerisation, bei der der Regler in das Polyamid bzw. Copolyamid eingebracht wird. Es ist aber auch möglich, den Regler in der Schmelze oder in der festen Phase oder in Lösung mit einem hochmolekularen Polyamid oder Copolyamid umzusetzen. Die jeweils separat voneinander hergestellten disäure- und diamingeregelten Polyamidkomponenten werden granuliert und anschließend vermahlen oder zu einem Fällpulver verarbeitet. In einem sich anschließenden weiteren Schritt werden die beiden Komponenten zu einem DryBlend vermischt, beispielsweise mithilfe eines schnelllaufenden Mischers.

Trotz der zahlreichen Vorteile der aus dem Stand der Technik bekannten Verfahren zum Herstellen eines Bauteils mittels Lasersinterns, insbesondere durch Aufbereiten von Altpulvern oder Herstellen speziell für das Lasersintern geeigneten Polyamid- bzw. Copolyamid-Pulvern, beinhalten diese noch Verbesserungspotenzial, da diese Verfahren sehr aufwendig und dadurch unwirtschaftlich sind und sich die gewünschten Bauteilqualitäten dennoch nicht erreichen lassen. Deshalb wird gegenwärtig immer noch die Verarbeitung von Materialmischungen aus Neupulver und Altmaterial bevorzugt. Die Verwendung von bis zu 60 % Neupulver stellt jedoch einen massiven Kostentreiber im Lasersinterprozess dar. Außerdem wirkt sich der Einsatz von Materialmischungen negativ auf die Reproduzierbarkeit und somit auf die Bauteilqualität aus. Das Altpulver muss dann trotzdem nach mehrmaligem Gebrauch entsorgt werden.

### Offenbarung der Erfindung

Es wird daher ein Verfahren vorgeschlagen, das die Nachteile bekannter Verfahren zumindest weitgehend vermeidet. Insbesondere wird ein Verfahren zum Herstellen eines Bauteils mittels Lasersinterns vorgeschlagen, bei dem sich Prozesskosten reduzieren lassen und gleichzeitig die Reproduzierbarkeit des Eigenschaftsprofils der Bauteile erhöhen lässt. Insbesondere soll mit dem erfindungsgemäßen Verfahren Altpulver chemisch aufbereitet werden, sodass dessen Fließeigenschaften denen von Neupulver gleichen. Hierdurch soll eine mehrmalige Wiederverwendung des Altpulvers ermöglicht werden, wodurch sich der Einsatz von Materialmischungen mit hohem Anteil an Neupulver erübrigt.

Um somit Kosten, die durch eine Beimischung von teurem Neupulver entstehen können, zu verringern und gleichzeitig eine Kontinuität in Bezug auf die gewünschten Eigenschaften der hergestellten Bauteile zu erzielen, wird hiermit eine Recyclingtechnologie zur vollständigen Pulver-Wiederverwertung bereitgestellt. Das vorgestellte Verfahren umfasst hierbei insbesondere eine Herstellung von Kunststoffpulvern, welche unempfindlicher gegen eine thermische Beanspruchung beim Lasersinterprozess sind.

Ein erfindungsgemäßes Verfahren zum Herstellen eines Bauteils mittels Lasersinterns, umfasst die Schritte, bevorzugt in der angegebenen Reihenfolge:
- Bereitstellen eines Kunststoffpulvers,
- Aufbringen mehrerer Pulverschichten des Kunststoffpulvers in einer aufeinander folgenden Reihenfolge auf eine Bauplattform einer Prozesskammer
- Erwärmen jeder aufgebrachten Pulverschicht auf eine Prozesstemperatur,
- thermisches Behandeln, insbesondere lokales thermisches Behandeln, jeder aufgebrachten Pulverschicht mittels eines Lasers, wobei ein erster Teil des Kunststoffpulvers auf der Bauplattform aufgeschmolzen und durch Abkühlen gesintert wird und ein zweiter Teil des Kunststoffpulvers altert und nicht sintert, wobei durch das Schmelzen und Sintern das Bauteil ausgebildet wird,
- Sammeln des zweiten Teil des Kunststoffpulvers
- Zuführen des gesammelten zweiten Teils des Kunststoffpulvers in eine Mischvorrichtung,
- Zugabe von mindestens einem Additiv zu dem zweiten Teil des Kunststoffpulvers in die Mischvorrichtung, wobei das Additiv zum Verkürzen der Molekülketten des zweiten Teils des Kunststoffpulvers ausgebildet ist, wobei das Additiv mindestens ein Element ist, ausgewählt aus der Gruppe bestehend aus Alkandiolen, Alkalicarbonaten, Erdalkalicarbonaten, Carbonsäuren, Dicarbonsäuren, Carbonsäureanhydriden, Carbonsäuredianhydriden und cyclischen Ketonen,
- Ausbilden einer Mischung des zweiten Teils des Kunststoffpulvers mit dem Additiv durch Mischen,
- Einbringen der Mischung des zweiten Teils des Kunststoffpulvers mit dem Additiv auf die Bauplattform der Prozesskammer, und
- Erwärmen der Mischung des zweiten Teils des Kunststoffpulvers mit dem Additiv derart, dass die Molekülketten des zweiten Teils des Kunststoffpulvers verkürzt werden.

Bei dem Verfahren werden nacheinander mehrere Schichten auf die Bauplattform aufgebracht. Da die Prozesskammer auf die Prozesstemperatur mittels einer Heizung erwärmt wird, werden alle Schichten auf die Prozesstemperatur erwärmt. Die Prozessreihenfolge ist dabei so, dass eine erste Schicht auf die Bauplattform aufgebracht und erwärmt wird. Anschließend erfolgt das thermische Behandeln mittels Lasers. Dabei wird ein erster Teil des Kunststoffpulvers auf der Bauplattform aufgeschmolzen und durch Abkühlen gesintert. Aus diesem ersten Teil wird ein Teil der Form des Bauteils hergestellt. Diejenigen Stellen der Pulverschicht, die nicht mit dem Laser behandelt werden, bilden den zweiten Teil des Kunststoffpulvers, altern aufgrund der Prozesstemperatur und sintern nicht. Im Anschluss daran wird die Bauplattform etwas abgesenkt und eine zweite Schicht aufgebracht und erwärmt. Anschließend erfolgt das thermische Behandeln mittels Lasers. Dabei wird wiederum ein erster Teil des Kunststoffpulvers auf der Bauplattform aufgeschmolzen und durch Abkühlen gesintert. Aus diesem ersten Teil wird ein weiterer Teil der Form des Bauteils hergestellt. Diejenigen Stellen der Pulverschicht, die nicht mit dem Laser behandelt werden, bilden den zweiten Teil des Kunststoffpulvers, altern aufgrund der Prozesstemperatur und sintern nicht. Diese Schritte werden für weitere bzw. mehrere Pulverschichten wiederholt, bis das Bauteil aus den Schichten ausgebildet ist. Nach Herstellung des so ausgebildeten Bauteils wird der zweite Teil des Kunststoffpulvers aus der Prozesskammer entfernt und gesammelt. Der so gesammelte zweite Teil des Kunststoffpulvers wird in einer Mischvorrichtung mit einem Additiv versetzt und mit diesem gemischt. Durch Erwärmen der Mischung aus zweitem Teil des Kunststoffpulvers und Additiv, werden die Molekülketten des Kunststoffpulvers verkürzt, bevorzugt bis auf die Länge von neuem Kunststoffpulver. Dadurch kann das so aufbereitete Kunststoffpulver bei der Herstellung eines weiteren Bauteils ohne Qualitätseinschränkung mitverwendet werden.

Die Mischung des zweiten Teils des Kunststoffpulvers mit dem Additiv kann in der Mischvorrichtung erwärmt werden. In einer alternativen Ausgestaltung des vorliegenden Verfahrens können mindestens ein erstes Bauteil und mindestens ein zweites Bauteil nacheinander hergestellt werden, wobei die bei der Herstellung des ersten Bauteils ausgebildete Mischung hieran anschließend bei der Herstellung des zweiten Bauteils als der zweite Teil des Kunststoffpulvers zusammen mit dem Additiv zugegeben und durch Erwärmen auf die Prozesstemperatur gebracht wird. In dieser alternativen Ausgestaltung kann die chemische Reaktion zur Verkürzung der Ketten erst bei der Herstellung des zweiten Bauteils in der Prozesskammer beim Lasersinterprozess eintreten, wenn das Kunststoffpulver auf die Prozesstemperatur erwärmt wird und/oder mit dem Laser aufgeschmolzen wird. Dadurch kann hier eine vorzeitige Verkürzung der Molekülketten verhindert werden.

Das Verfahren umfasst weiterhin das Abkühlen der Prozesskammer nach dem thermischen Behandeln der letzten aufgebrachten Pulverschicht auf eine Temperatur, bei der das Bauteil seine Form behält. Nach Fertigstellung des Bauteils erfolgt beispielsweise ein langsames und kontrolliertes Abkühlen der Prozesskammer bis zu einer Temperatur, bei der kein Verzug des Bauteils, insbesondere durch inhomogene Kristallisation des Kunststoffes, stattfindet. Das aus dem ersten Teil des Kunststoffpulvers der jeweiligen Schichten gebildete Bauteil kann dann aus der Prozesskammer entnommen werden und ist formstabil.

Die Mischung des zweiten Teils des Kunststoffpulvers und des Additivs wird auf eine Temperatur von 140 °C bis 190 °C und bevorzugt 160 °C bis 180 °C erwärmt. Bei dieser Temperatur setzt die chemische Temperatur zur Verkürzung der Molekülketten des Kunststoffpulvers ein. Über die Temperatur lässt sich dieser Prozess gut steuern.

Das Additiv kann in einem flüssigen Zustand zu dem zweiten Teil des Kunststoffpulvers in die Mischvorrichtung zugegeben werden. Beispielsweise wird das Additiv auf den zweiten Teil des Kunststoffpulvers gesprüht. Dadurch wird eine gleichmäßige Verteilung des Additivs auf dem Kunststoffpulver erreicht. Alternativ kann das Additiv in einem festen Zustand zu dem zweiten Teil des Kunststoffpulvers in die Mischvorrichtung zugegeben werden. Vor dem Zugeben zu dem zweiten Teil des Kunststoffpulvers wird das Additiv gemahlen und gesiebt. Insbesondere wird das Additiv derart gemahlen, dass ein mittlerer Partikeldurchmesser kleiner als 200 µm ist.

Das Mischen erfolgt dabei mittels Bewegen der Mischung oder mittels Verwirbelung der Mischung. So wird bei Additiven in einem festen Zustand die Mischung durch Bewegen oder Verwirbelung erzeugt. Bei Additiven in einem flüssigen Zustand kann die Mischung durch Verwirbelung erzeugt werden.

Das Additiv kann mit 0,05 Gew.-% bis 10,0 Gew.-% bezogen auf den zweiten Teil des Kunststoffpulvers zugegeben werden. Diese Mengen sind ausreichend für die Verkürzung der Molekülketten.

Im Rahmen der vorliegenden Erfindung umfasst das Kunststoffpulver mindestens ein Polymer. Bevorzugt ist das Polymer ein aliphatisches oder teilaromatisches Polyamid oder Copolyamid. Das Polyamid ist mindestens ein Element ausgewählt aus der Gruppe bestehend aus: Polyamid 6, Polyamid 11, Polyamid 12, Polyamid 4.6, Polyamid 4.10, Polyamid 6.10, Polyamid 10.10, Polyamid 6.6, Polyamid 6T/66, Polyamid 6/6T und deren Copolymere.

Das Additiv ist mindestens ein Element ausgewählt aus der Gruppe bestehend aus: Alkandiolen (Glykole), Alkalicarbonaten, insbesondere Kaliumcarbonat, Erdalkalicarbonaten, Carbonsäuren, Dicarbonsäuren, insbesondere Sebacinsäure, Carbonsäureanhydriden und Carbonsäuredianhydriden, cyclische Ketone.

Das Additiv ist ausgebildet, die Molekülketten des zweiten Teils des Kunststoffpulvers derart zu verkürzen, dass mindestens 80 % der verkürzten Molekülketten eine Länge aufweisen, die um nicht mehr als 20 % und bevorzugt nicht mehr als 10 % größer als die Länge der Molekülketten des Kunststoffpulvers in seinem Ausgangszustand, d.h. vor der Verwendung bei dem Verfahren, ist.

Das Erwärmen der aufgebrachten Pulverschichten auf die Prozesstemperatur erfolgt durch Heizen der Prozesskammer.

Ein Grundgedanke der vorliegenden Erfindung ist, dass das Altpulver nach dem Lasersinter-Prozess mit Additiven versetzt wird, mit denen die Polymerkettenlänge durch chemische Reaktionen auf die Kettenlänge des Neupulvers "zugeschnitten" wird (chemische Aufbereitung). Damit unterscheidet sich die vorliegende Erfindung insbesondere von bekannten Verfahren, in welchen sogenannte "Regler" vorteilhaft bereits während des Herstellungsprozesses, d. h. bei der Polymerisation zu Polyamid oder Copolyamid, zugegeben werden. Der sogenannte Regler greift an den Endgruppen des Polyamids oder Copolyamids an und reguliert dadurch deren Anzahl und die Reaktivität des Polyamids oder Copolyamids. Die Aufreinigung der Kunststoffe und anschließende Verarbeitung zu lasersinterbaren Pulvern bedarf weiterer Prozessschritte. Bei den bekannten Verfahren handelt es sich meist um aufwendige Verfahren, bei denen spezielle Neupulver hergestellt werden. Bei anderen bekannten Verfahren aus dem Stand der Technik, befindet sich das Wasser oft in der Prozesskammer. Da Wasser bei 100 °C verdampft, kann das Wasser somit ein bereits gesintertes Bauteil derart angreifen, dass auch am bereits gesinterten Bauteil eine Kettenspaltung auftreten kann, wodurch sich die mechanischen Eigenschaften des Bauteils erheblich verschlechtern können. Außerdem kann ein Vorhandensein von Wasserdampf in der Lasersinteranlage Korrosion verursachen, während dies beim vorliegenden Verfahren ausgeschlossen ist, da die hierbei eingesetzten Additive höhere Siedepunkte aufweisen und nicht-flüchtig sind.

Die Schmelzviskosität und die Fließeigenschaften des mit dem vorliegenden Verfahren aufbereiteten Altpulvers entsprechen nach der Aufbereitung nahezu denen des Neupulvers. Die chemische Aufbereitung des Altpulvers kann wie folgt durchgeführt werden. Für die chemische Aufbereitung wird das Altpulver in ein abgeschlossenes Gefäß eingebracht, in dem es durch Bewegung (Taumelmischer) oder durch Verwirbelung mittels eines Inertgasstroms vermischt wird. Das feste Additiv kann in das Gefäß gegeben werden, während das flüssige Additiv mittels Sprühdüsen, welche an dem Gefäß angebracht sind, auf das Altpulver gesprüht werden kann. Dabei bewirkt das ständige Vermischen des Pulvers durch die rotierende Bewegung im Taumelmischer bzw. durch die Verwirbelung mittels Gasstrom eine feine und homogene Verteilung des Additivs auf dem Pulver. Das mit einer Schicht behaftete Altpulver kann anschließend über eine Verbindung mit der Lasersinterkammer direkt in die Kammer eingebracht werden. Erst beim Erwärmen bzw. Aufschmelzen des Pulvers im Pulverbett (z.B. bei Polyamid 12 auf ca. 180°C) setzt die chemische Reaktion ein. Durch die wiedergewonnen guten Fließeigenschaften des Materials in der Schmelze ist dann eine gute Bauteilqualität gegeben. Der Vorteil dieser Methode ist, dass diese Form der Aufbereitung wenig Platz und einen minimalen apparativen Aufbau benötigt und somit direkt neben der Lasersinteranlage durchgeführt werden kann. Ein mehrmaliges Aufbereiten des gealterten Pulvers direkt vor dem Lasersinter-Prozess wird dadurch möglich.

Besonders vorteilhaft an der Erfindung ist, dass durch das erfindungsgemäße Verfahren Kunststoff-Altpulver auf einfache Weise mehrmals zu einem qualitativ hochwertigen Ausgangswerkstoff aufbereitet werden kann, der anschließend über mehrere Lasersinter - Prozesszyklen eingesetzt werden kann. Hierdurch lassen sich komplexe Bauteilgeometrien nicht nur als Prototyp, sondern in Kleinserien wirtschaftlich lasersintern.

Ein weiterer Vorteil der Erfindung liegt darin, dass beim Lasersintern komplexeste Bauteilgeometrien durch schichtweise Formgebung ohne den Einsatz eines Werkzeuges und Stützstrukturen hergestellt werden können. Bei den traditionellen Fertigungsverfahren, wie z.B. dem Spritzgießen, ist man hingegen in der geometrischen Freiheit der Bauteile stark limitiert. Die Stückkosten steigen mit zunehmender Bauteilkomplexität stark an. Auch sind die Gesamtkosten bei der Produktion von Kleinserien mit dem Lasersintern oft geringer, da keine Kosten für die Anfertigung eines Werkzeuges anfallen. Ein weiterer Vorteil des Lasersinterns ist die Verfügbarkeit der lasergesinterten Teile in nur wenigen Tagen. Auch konstruktive Änderungen im Bauteil lassen sich schnell und preisgünstig umsetzten, indem die folgende Serie einfach mit den neuen Konstruktionsdaten lasergesintert wird. Ein möglicher Nachteil des Lasersinterns ist jedoch, dass mit zunehmender Stückzahl das Preisniveau für Lasersinter-Werkstoffe sehr viel höher liegt als für Werkstoffe, die z.B. im Spritzguss eingesetzt werden. Mit dem erfindungsgemäßen Verfahren wird nun der Zyklus der Wiederverwertung von gealtertem Lasersinter-Werkstoff (Altpulver) deutlich erhöht. Das Altpulver wird vor dem erneuten Einsatz im Lasersinter-Prozess chemisch aufbereitet. Es erhält dadurch Fließeigenschaften, die denen von Neupulver gleichen. Das Beimischen von bis zu 60 % hochpreisigem Neupulver wird dadurch hinfällig. Hierdurch ergibt sich ein großes Einsparpotenzial, wodurch der Lasersinterprozess deutlich wirtschaftlicher wird.

### Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:
- Figur 1: eine Vorrichtung zum Herstellen eines Bauteils mittels Lasersinterns,
- Figur 2: eine vergrößerte Ansicht einer Pulverschicht während des Lasersinterns,
- Figur 3: eine Ansicht eines Stapels mit mehreren Pulverschichten, und
- Figur 4: eine Mischvorrichtung.

### Ausführungsformen der Erfindung

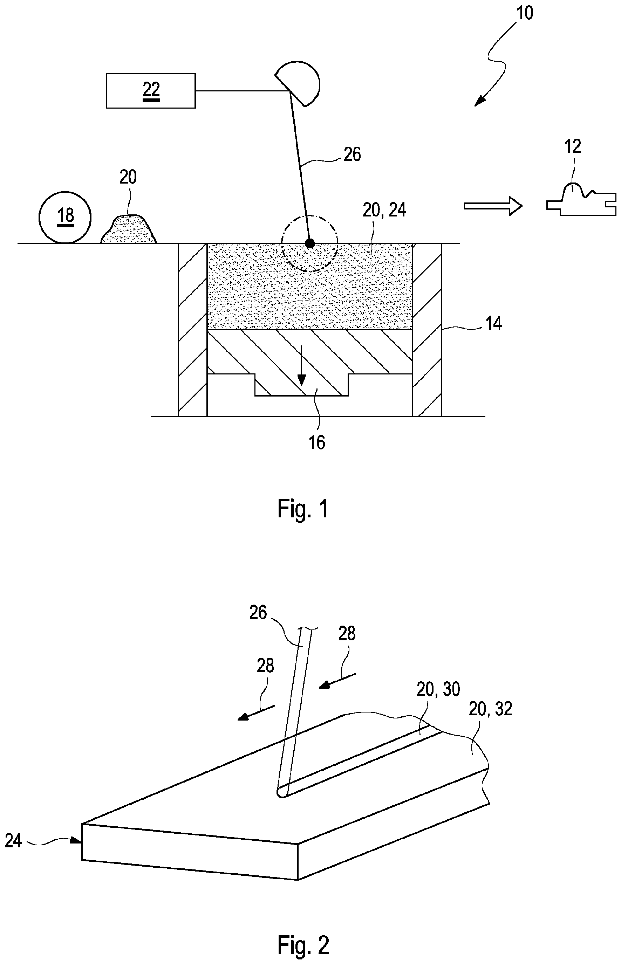

Figur 1 zeigt eine Vorrichtung 10 zum Herstellen eines Bauteils 12 mittels Lasersinterns. Die Vorrichtung 10 umfasst eine Prozesskammer 14 mit einer höhenverstellbaren Bauplattform 16 und einer Zufuhreinrichtung 18 zum Zuführen von Kunststoffpulver 20 zu der Bauplattform 16. Weiterhin kann die Vorrichtung 10 einen Vorratsbehälter mit dem Kunststoffpulver 20 (nicht dargestellt) umfassen. Zu diesem Zweck ist die Zufuhreinrichtung 18 angrenzend an die Bauplattform 16 angeordnet. Die Vorrichtung 10 weist weiterhin eine Laserquelle 22 auf. Die Vorrichtung 10 ist ausgebildet das Bauteil 12 schichtweise bzw. Schicht für Schicht herzustellen.

Ein erfindungsgemäßes Verfahren zum Herstellen eines mittels Lasersinterns hergestellten Bauteils 12 wird nachstehend ausführlicher beschrieben. Mittels der Zufuhreinrichtung 18 wird ein Kunststoffpulver 20 bereitgestellt. Das Kunststoffpulver 20 umfasst mindestens ein Polymer. Bevorzugt ist das Polymer ein aliphatisches oder teilaromatisches Polyamid oder ein Copolyamid. Das Polyamid umfasst mindestens ein Element, das ausgewählt ist aus der Gruppe bestehend aus: Polyamid 6, Polyamid 11, Polyamid 12, Polyamid 4.6, Polyamid 4.10, Polyamid 6.10, Polyamid 10.10, Polyamid 6.6, Polyamid 6T/66, Polyamid 6/6T und deren Copolymere. Mittels der Zufuhreinrichtung 18 wird zunächst eine Pulverschicht 24 des Kunststoffpulvers 20 auf die Bauplattform 16 aufgebracht. Die Bauplattform 16 befindet sich dabei in ihrer höchsten Stellung. Die Prozesskammer 14 wird mittels einer nicht näher gezeigten Heizung auf eine Prozesstemperatur erwärmt. Durch das Heizen der Prozesskammer 14 wird auch die Pulverschicht 24 auf die Prozesstemperatur erwärmt. Die Prozesstemperatur ist niedriger als die Schmelztemperatur des Kunststoffpulvers 20. Die Prozesstemperatur ist beispielsweise 2 °C bis 10 °C niedriger als die Schmelztemperatur des Kunststoffpulvers 20.

Figur 2 zeigt eine vergrößerte Ansicht einer Pulverschicht 24 während des Lasersinterns. Dabei wird die Pulverschicht 24 thermisch mittels eines Lasers 26 behandelt. Die thermische Behandlung erfolgt dabei lokal an denjenigen Stellen, an denen der Laser 26 auf die Pulverschicht 24 trifft. Der Laser 26 wird relativ zu der Pulverschicht 24 bewegt. In Figur 2 ist eine beispielhafte Bewegungsrichtung des Lasers 26 mittels Pfeile 28 angedeutet. Beim thermischen Behandeln mittels Lasers 26 wird somit ein erster Teil 30 des Kunststoffpulvers 20 der Pulverschicht 24 auf der Bauplattform 16 aufgeschmolzen und durch Abkühlen gesintert. Ein zweiter Teil 32 des Kunststoffpulvers 20 der Pulverschicht 24 auf der Bauplattform 16, der nicht mit dem Laser 26 behandelt wird, altert aufgrund der Prozesstemperatur und sintert nicht.

Anschließend wird die Bauplattform 16 etwas abgesenkt und eine weitere Pulverschicht 24 auf die bereits thermisch behandelte Pulverschicht 24 auf der Bauplattform 16 aufgebracht. Die obigen Schritte werden wiederholt. Mitanderen Worten wird die weitere Pulverschicht 24 auf die Prozesstemperatur erwärmt, thermisch mittels Lasers 26 behandelt, wobei wiederum ein erster Teil 30 des Kunststoffpulvers 20 der weiteren Pulverschicht 24 auf der Bauplattform 16 aufgeschmolzen und durch Abkühlen gesintert wird. Auch bei der weiteren Pulverschicht 24 altert ein zweiter Teil 32 des Kunststoffpulvers 20 der weiteren Pulverschicht 24 auf der Bauplattform 16 und sintert nicht. Zum Ausbilden des Bauteils 12 werden in der beschriebenen Weise in einer aufeinanderfolgenden Reihenfolge weitere bzw. mehrere Pulverschichten 24 auf die Bauplattform 16 aufgebracht, jeweils auf Prozesstemperatur erwärmt und thermisch mittels des Lasers 26 behandelt.

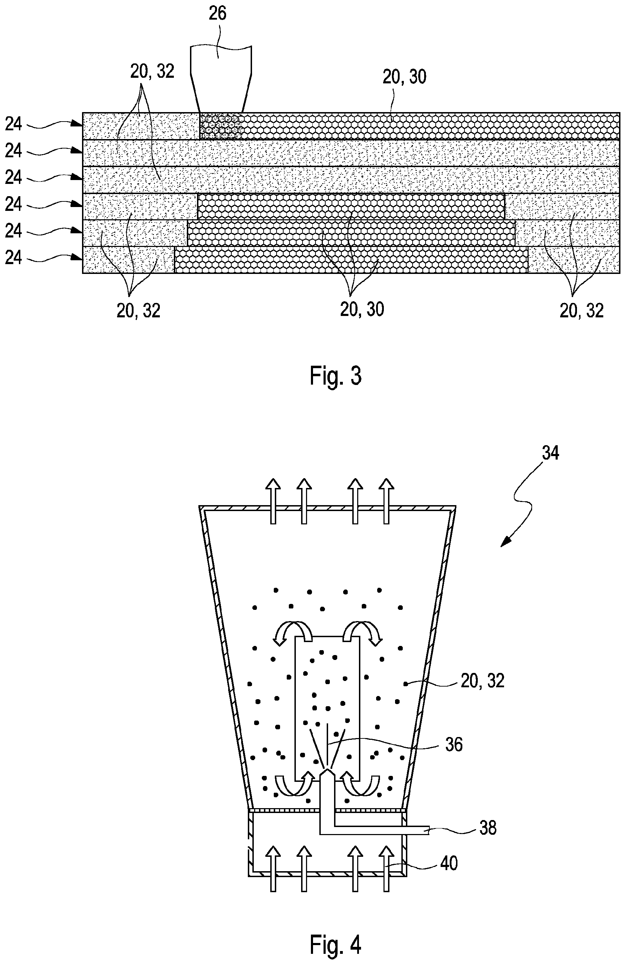

Figur 3 zeigt eine Ansicht eines so gebildeten Stapels mit mehreren Pulverschichten 24 auf der Bauplattform 16. Lediglich beispielhaft umfasst der Stapel sechs Pulverschichten 24. Zu erkennen ist auch der erste Teil 30 und der zweite Teil 32 des Kunststoffpulvers 20 der jeweiligen Pulverschichten 24. Durch das Schmelzen und Sintern des ersten Teils 30 des Kunststoffpulvers 20 der jeweiligen Pulverschichten 24 wird das Bauteil 12 ausgebildet. Nach dem thermischen Behandeln der letzten aufgebrachten Pulverschicht 24 wird die Prozesskammer 14 langsam und kontrolliert abgekühlt auf eine Temperatur, bei der das Bauteil 12 seine Form behält, d.h. eine Temperatur, bei der kein Verzug des Bauteils, insbesondere durch inhomogene Kristallisation des Kunststoffes, stattfindet. Anschließend wird der zweite Teil 32 des Kunststoffpulvers 20 der jeweiligen Pulverschichten 24 gesammelt.

Figur 4 zeigt eine beispielhafte Mischvorrichtung 34. Der so gesammelte zweite Teil 32 des Kunststoffpulvers 20 wird in die Mischvorrichtung 34 zugeführt. Die Mischvorrichtung 34 ist im Wesentlichen konisch ausgebildet und verjüngt sich in Schwerkraftrichtung. In die Mischvorrichtung 34 wird weiterhin mindestens ein Additiv 36 zu dem zweiten Teil 32 des Kunststoffpulvers 20 zugegeben. Das Additiv 36 ist zum Verkürzen der Molekülketten des zweiten Teils 32 des Kunststoffpulvers 20 ausgebildet. Das Additiv 36 ist mindestens ein Element ausgewählt aus der Gruppe bestehend aus Alkandiole (Glykole), Alkalicarbonate, insbesondere Kaliumcarbonat, Erdalkalicarbonate, Carbonsäuren und Dicarbonsäuren, insbesondere Sebacinsäure, Carbonsäureanhydride und Carbonsäuredianhydride, cyclische Ketone. Bei dem gezeigten Beispiel wird das Additiv 36 in einem flüssigen Zustand zu dem zweiten Teil 32 des Kunststoffpulvers 20 zugegeben. Beispielsweise werden die Partikel des zweiten Teils 32 des Kunststoffpulvers 20 durch Besprühen beschichtet. Zu diesem Zweck sind Sprühdüsen 38, aus welchen das Additiv 36 zum Verkürzen der Molekülketten gesprüht wird, im Boden der Mischvorrichtung 34 fixiert und somit vollständig vom Kunststoffpulver 20 umgeben. Anschließend erfolgt das Ausbilden einer Mischung des zweiten Teils 32 des Kunststoffpulvers 20 mit dem Additiv 36 durch mischen. Das Mischen kann dabei mittels Verwirbelung der Mischung erfolgen. Zu diesem Zweck ist eine Luftzufuhrvorrichtung 40 am Boden der Mischvorrichtung 34 angeordnet. Die Abluft verlässt die Mischvorrichtung 34 nach oben entweichend. Durch eine konstante Luftzufuhr von unten wird eine kontrollierte Verwirbelung des Kunststoffpulvers 20 erzeugt, wodurch ein Verkleben der einzelnen Partikel verhindert werden kann. Der Vorteil dieses Verfahrens ist eine gleichmäßige Beschichtung des Kunststoffpulvers 20 mit dem Additiv 36 ohne Agglomeration der einzelnen Partikel. Beispielsweise arbeitet die Mischvorrichtung 34 nach dem sogenannten Wurster-Bottom-Spray-Verfahren. Das Additiv 36 wird mit dem Anteil von 0,05 Gew.-% bis 10,0 Gew.-% bezogen auf den zweiten Teil 32 des Kunststoffpulvers 20 zugegeben.

Alternativ kann das Additiv 36 in einem festen Zustand zu dem zweiten Teil 32 des Kunststoffpulvers 20 in einer Mischvorrichtung zugegeben werden. Dabei wird das feste Additiv 36 vor dem Zugeben zu dem zweiten Teil 32 des Kunststoffpulvers 20 gemahlen, so dass ein mittlerer Partikeldurchmesser kleiner als 200 µm ist. Das Mischen erfolgt dann durch Bewegen oder Verwirbelung der Mischung. Ein Beispiel für eine geeignete Mischvorrichtung für feste Additive ist ein Taumelmischer.

Anschließend wird die Mischung des zweiten Teils 32 des Kunststoffpulvers 20 mit dem Additiv 36 derart erwärmt, dass die Molekülketten des zweiten Teils 32 des Kunststoffpulvers 20 verkürzt werden. Das Additiv 36 ist ausgebildet, die Molekülketten des zweiten Teils 32 des Kunststoffpulvers 20 derart zu verkürzen, dass mindestens 80 % der verkürzten Molekülketten eine Länge aufweisen, die um nicht mehr als 20 % und bevorzugt nicht mehr als 10 % größer als die Länge der Molekülketten des Kunststoffpulvers 20 in einem Neuzustand ist. Die Mischung des zweiten Teils 32 des Kunststoffpulvers 20 und des Additivs 36 wird auf eine Temperatur von 140 °C bis 190 °C und bevorzugt 160 °C bis 180 °C erwärmt. Ist das Kunststoffpulver Polyamid 12, wird beispielsweise auf ungefähr 180 °C erwärmt.

Das Erwärmen kann dabei in der Mischvorrichtung 34 erfolgen. Alternativ und bevorzugt wird das Kunststoffpulver nicht in der Mischvorrichtung erwärmt, damit die chemische Reaktion zur Verkürzung der Ketten eintritt, sondern dass die Kettenverkürzung erst beim nächsten Lasersinterprozess in der Prozesskammer 14 stattfindet, wenn das Kunststoffpulver 20 auf Prozesstemperatur erwärmt wird, oder mit dem Laser 26 aufgeschmolzen wird. Beispielsweise wird zunächst ein erstes Bauteil in der oben beschriebenen Weise hergestellt und anschließend ein zweites Bauteil. Die bei der Herstellung des ersten Bauteils in der zuvor beschriebenen Weise ausgebildete Mischung des zweiten Teils 32 des Kunststoffpulvers 20 und das Additiv 36 werden dann dem Kunststoffpulver 20 bei der Herstellung des zweiten Bauteils zugegeben und durch Erwärmen auf die Prozesstemperatur erwärmt. Dabei tritt die Verkürzung der Molekülketten erst unmittelbar vor oder während dem thermischen Behandeln mittels Lasers 26 aufgrund der Erwärmung auf Prozesstemperatur bei dem zweiten Bauteil ein.

Mit dem erfindungsgemäßen Verfahren lässt sich somit das bei der Herstellung eines Bauteils anfallende und gealterte Kunststoffpulver (Altpulver) chemisch aufbereiten, indem die Molekülketten verkürzt werden, um es dann bei der Herstellung eines nachfolgenden Bauteils wieder zu verwenden, ohne dass qualitative Einschränkungen vorliegen. Die Fließfähigkeit der Kunststoffschmelze erhöht sich dann durch die Kettenspaltung und es können erneut Bauteile mit guter Qualität gesintert werden. Das Hinzufügen des Additivs zur Kettenverkürzung erfolgt dabei erst, nachdem ein kompletter Lasersinterprozess zum Herstellen des Bauteils abgeschlossen ist. Es werden also Bauteile durch schichtweises Lasersintern hergestellt. Anschließend wird das bei dem Prozess gealterte und nicht-gesinterte Pulver entnommen, mit Additiv versetzt und für die Herstellung weiterer Bauteile mittels Lasersinterns wiederverwendet. Nach diesem Prozess wird das nicht-gesinterte Pulver wieder mit Additiv versetzt und für den nächsten Lasersinterprozess verwendet. Diese Verfahrensschritte können dabei mehrfach wiederholt werden.

## Patentansprüche

1. Verfahren zum Herstellen eines Bauteils (12) mittels Lasersinterns, umfassend die Schritte:
- Bereitstellen eines Kunststoffpulvers (20),
- Aufbringen mehrerer Pulverschichten (24) des Kunststoffpulvers (20) in einer aufeinander folgenden Reihenfolge auf eine Bauplattform (16) einer Prozesskammer (14),
- Erwärmen jeder aufgebrachten Pulverschicht (24) auf eine Prozesstemperatur,
- thermisches Behandeln jeder aufgebrachten Pulverschicht (24) mittels eines Lasers (26), wobei ein erster Teil (30) des Kunststoffpulvers (20) auf der Bauplattform (16) aufgeschmolzen und durch Abkühlen gesintert wird und ein zweiter Teil (32) des Kunststoffpulvers (20) altert und nicht sintert, wobei durch das Schmelzen und Sintern das Bauteil (12) ausgebildet wird,
- Sammeln des zweiten Teils (32) des Kunststoffpulvers (20),
- Zuführen des gesammelten zweiten Teils (32) des Kunststoffpulvers (20) in eine Mischvorrichtung (34) **gekennzeichnet durch**
- Zugabe von mindestens einem Additiv (36) zu dem zweiten Teil (32) des Kunststoffpulvers (20) in die Mischvorrichtung (34), wobei das Additiv (36) zum Verkürzen der Molekülketten des zweiten Teils (32) des Kunststoffpulvers (20) ausgebildet ist, wobei das Additiv (36) mindestens ein Element ist ausgewählt aus der Gruppe bestehend aus Alkandiolen, Alkalicarbonaten, Erdalkalicarbonaten, Carbonsäuren, Dicarbonsäuren, Carbonsäureanhydriden, Carbonsäuredianhydriden und cyclischen Ketonen,
- Ausbilden einer Mischung des zweiten Teils (32) des Kunststoffpulvers (20) mit dem Additiv (20) durch Mischen,
- Einbringen der Mischung des zweiten Teils (32) des Kunststoffpulvers (20) mit dem Additiv auf die Bauplattform (16) der Prozesskammer (14) und
- Erwärmen der Mischung des zweiten Teils (32) des Kunststoffpulvers (20) mit dem Additiv (36) derart, dass die Molekülketten des zweiten Teils (32) des Kunststoffpulvers (20) verkürzt werden.

2. Verfahren nach Anspruch 1, wobei die Mischung des zweiten Teils (32) des Kunststoffpulvers (20) mit dem Additiv (36) in der Mischvorrichtung erwärmt wird.

3. Verfahren nach Anspruch 1, wobei mindestens ein erstes Bauteil (12) und ein zweites Bauteil nacheinander hergestellt werden, wobei bei der Herstellung des ersten Bauteils (12) ausgebildete Mischung des zweiten Teils (32) des Kunststoffpulvers (20) dem Kunststoffpulver (20) bei der Herstellung des zweiten Bauteils zugegeben wird und durch Erwärmen auf die Prozesstemperatur erwärmt wird.

4. Verfahren nach einem der Ansprüche 1 bis 3, wobei die Prozesstemperatur niedriger als die Schmelztemperatur des Kunststoffpulvers (20) ist.

5. Verfahren nach einem der Ansprüche 1 bis 4, weiterhin umfassend ein Abkühlen der Prozesskammer (14) nach dem thermischen Behandeln der letzten aufgebrachten Pulverschicht (24) auf eine Temperatur, bei der das Bauteil (12) seine Form behält.

6. Verfahren nach einem der Ansprüche 1 bis 5, wobei die Mischung des zweiten Teils (32) des Kunststoffpulvers (20) und des Additivs (36) zu dem Kunststoffpulver (20) auf eine Temperatur von 140 °C bis 190 °C und bevorzugt 160 °C bis 180 °C erwärmt wird.

7. Verfahren nach einem der Ansprüche 1 bis 6, wobei das Additiv (36) in einem flüssigen Zustand zu dem zweiten Teil des Kunststoffpulvers (20) in die Mischvorrichtung (34) zugegeben wird, insbesondere auf den zweiten Teil (32) des Kunststoffpulvers (20) gesprüht wird.

8. Verfahren nach einem der Ansprüche 1 bis 6, wobei das Additiv (36) in einem festen Zustand zu dem zweiten Teil des Kunststoffpulvers (20) in die Mischvorrichtung (34) zugegeben wird.

9. Verfahren nach Anspruch 8, wobei das Additiv (36) vor dem Zugeben zu dem zweiten Teil (32) des Kunststoffpulvers (20) derart gemahlen wird, dass ein mittlerer Partikeldurchmesser von 50 µm bis 200 µm angenommen wird.

10. Verfahren nach einem der Ansprüche 1 bis 9, wobei das Mischen mittels Bewegen der Mischung oder mittels Verwirbelung der Mischung erfolgt.

11. Verfahren nach einem der Ansprüche 1 bis 10, wobei das Additiv (36) mit 0,05 Gew.-% bis 10,0 Gew.% bezogen auf den zweiten Teil des Kunststoffpulvers (20) zugegeben wird.

12. Verfahren nach einem der Ansprüche 1 bis 11, wobei das Kunststoffpulver (20) mindestens ein Polymer umfasst, wobei das Polymer ein aliphatisches Polyamid, ein teilaromatisches Polyamid oder ein Copolyamid ist.

13. Verfahren nach Anspruch 12, wobei das Polyamid mindestens ein Element ist ausgewählt aus der Gruppe bestehend aus Polyamid 6, Polyamid 11, Polyamid 12, Polyamid 4.6, Polyamid 4.10, Polyamid 6.10, Polyamid 10.10, Polyamid 6.6, Polyamid 6T/66, Polyamid 6/6T und deren Copolymere.

14. Verfahren nach einem der Ansprüche 1 bis 13, wobei das Additiv (36) ausgebildet ist, die Molekülketten des zweiten Teils (32) des Kunststoffpulvers (20) derart zu verkürzen, dass mindestens 80 % der verkürzten Molekülketten eine Länge aufweisen, die um nicht mehr als 20 % und bevorzugt nicht mehr als 10 % größer als die Länge der Molekülketten des Kunststoffpulvers (20) in einem Neuzustand ist.

15. Verfahren nach einem der Ansprüche 1 bis 14, wobei das Erwärmen der aufgebrachten Pulverschichten (24) auf die Prozesstemperatur durch Heizen der Prozesskammer (14) erfolgt.

## Claims

1. Method for producing a component (12) by means of laser sintering, comprising the steps of:
- providing a polymer powder (20),
- applying a number of layers of powder (24) of the polymer powder (20) in a successive sequence to a building platform (16) of a process chamber (14),
- heating each applied layer of powder (24) to a process temperature,
- thermally treating each applied layer of powder (24) by means of a laser (26), a first part (30) of the polymer powder (20) on the building platform (16) being melted and sintered by cooling and a second part (32) of the polymer powder (20) being aged and not sintered, the component (12) being formed by the melting and sintering,
- collecting the second part (32) of the polymer powder (20),
- feeding the collected second part (32) of the polymer powder (20) into a mixing device (34), **characterized by**
- adding at least one additive (36) to the second part (32) of the polymer powder (20) in the mixing device (34), the additive (36) being designed to shorten the molecular chains of the second part (32) of the polymer powder (20), the additive (36) being at least one element selected from the group consisting of alkanediols, alkali carbonates, earth alkali carbonates, carboxylic acids, dicarboxylic acids, carboxylic acid anhydrides, carboxylic acid dianhydrides and cyclic ketones,
- forming a mixture of the second part (32) of the polymer powder (20) with the additive (20) by mixing,
- introducing the mixture of the second part (32) of the polymer powder (20) with the additive onto the building platform (16) of the process chamber (14) and
- heating the mixture of the second part (32) of the polymer powder (20) with the additive (36) in such a way that the molecular chains of the second part (32) of the polymer powder (20) are shortened.

2. Method according to Claim 1, the mixture of the second part (32) of the polymer powder (20) with the additive (36) being heated in the mixing device.

3. Method according to Claim 1, at least a first component (12) and a second component being produced one after the other, the mixture of the second part (32) of the polymer powder (20) that is formed during the production of the first component (12) being added to the polymer powder (20) during the production of the second component and brought up to the process temperature by heating.

4. Method according to one of Claims 1 to 3, the process temperature being lower than the melting temperature of the polymer powder (20).

5. Method according to one of Claims 1 to 4, further comprising cooling of the process chamber (14) after the thermal treatment of the last applied layer of powder (24) to a temperature at which the component (12) retains its shape.

6. Method according to one of Claims 1 to 5, the mixture of the second part (32) of the polymer powder (20) and the additive (36) added to the polymer powder (20) being heated to a temperature of 140°C to 190°C and preferably 160°C to 180°C.

7. Method according to one of Claims 1 to 6, the additive (36) being added in a liquid state to the second part of the polymer powder (20) in the mixing device (34), in particular being sprayed onto the second part (32) of the polymer powder (20).

8. Method according to one of Claims 1 to 6, the additive (36) being added in a solid state to the second part of the polymer powder (20) in the mixing device (34).

9. Method according to Claim 8, before being added to the second part (32) of the polymer powder (20), the additive (36) being ground in such a way that an average particle diameter of 50 µm to 200 µm is adopted.

10. Method according to one of Claims 1 to 9, the mixing being performed by means of moving the mixture or by means of swirling the mixture.

11. Method according to one of Claims 1 to 10, the additive (36) being added in a proportion of 0.05% by weight to 10.0% by weight in relation to the second part of the polymer powder (20).

12. Method according to one of Claims 1 to 11, the polymer powder (20) comprising at least one polymer, the polymer being an aliphatic polyamide, a partly aromatic polyamide or a copolyamide.

13. Method according to Claim 12, the polyamide being at least one element selected from the group consisting of polyamide 6, polyamide 11, polyamide 12, polyamide 4.6, polyamide 4.10, polyamide 6.10, polyamide 10.10, polyamide 6.6, polyamide 6T/66, polyamide 6/6T and the copolymers thereof.

14. Method according to one of Claims 1 to 13, the additive (36) being designed to shorten the molecular chains of the second part (32) of the polymer powder (20) in such a way that at least 80% of the shortened molecular chains have a length that is no more than 20% and preferably no more than 10% greater than the length of the molecular chains of the polymer powder (20) in a new state.

15. Method according to one of Claims 1 to 14, the heating of the applied layers of powder (24) to the process temperature being performed by heating the process chamber (14).

## Revendications

1. Procédé de fabrication d'un élément structural (12) au moyen du frittage sélectif par laser, comprenant les étapes suivantes :
- fourniture d'une poudre de matière plastique (20),
- application de plusieurs couches de poudre (24) de la poudre de matière plastique (20) dans un ordre séquentiel sur une plate-forme de construction (16) d'une chambre de processus (14),
- échauffement de chaque couche de poudre (24) appliquée à une température de processus,
- traitement thermique de chaque couche de poudre (24) appliquée au moyen d'un laser (26), une première partie (30) de la poudre de matière plastique (20) étant fondue sur la plate-forme de construction (16) et frittée par refroidissement et une deuxième partie (32) de la poudre de matière plastique (20) vieillissant et ne se frittant pas, l'élément structural (12) étant formé par la fusion et le frittage,
- collecte de la deuxième partie (32) de la poudre de matière plastique (20),
- acheminement de la deuxième partie (32) collectée de la poudre de matière plastique (20) dans un dispositif de mélange (34),
**caractérisé par**
- l'ajout d'au moins un additif (36) à la deuxième partie (32) de la poudre de matière plastique (20) dans le dispositif de mélange (34), l'additif (36) étant conçu pour raccourcir les chaînes moléculaires de la deuxième partie (32) de la poudre de matière plastique (20), l'additif (36) étant au moins un élément choisi dans le groupe composé des alcanes-diols, des carbonates alcalins, des carbonates alcalino-terreux, des acides carboxyliques, des acides dicarboxyliques, des anhydrides carboxyliques, des dianhydrides carboxyliques et des cétones cycliques,
- formation d'un mélange de la deuxième partie (32) de la poudre de matière plastique (20) avec l'additif (20) par mélange,
- charge du mélange de la deuxième partie (32) de la poudre de matière plastique (20) avec l'additif sur la plate-forme de construction (16) de la chambre de processus (14) et
- échauffement du mélange de la deuxième partie (32) de la poudre de matière plastique (20) avec l'additif (36) de telle sorte que les chaînes moléculaires de la deuxième partie (32) de la poudre de matière plastique (20) sont raccourcies.

2. Procédé selon la revendication 1, le mélange de la deuxième partie (32) de la poudre de matière plastique (20) avec l'additif (36) étant chauffé dans le dispositif de mélange.

3. Procédé selon la revendication 1, au moins un premier élément structural (12) et un deuxième élément structural étant fabriqués l'un après l'autre, le mélange de la deuxième partie (32) de la poudre de matière plastique (20) formé lors de la fabrication du premier élément structural (12) étant ajouté à la poudre de matière plastique (20) lors de la fabrication du deuxième élément structural et chauffé à la température de processus par échauffement.

4. Procédé selon l'une des revendications 1 à 3, la température de processus étant inférieure à la température de fusion de la poudre de matière plastique (20) .

5. Procédé selon l'une des revendications 1 à 4, comprenant en outre le refroidissement de la chambre de processus (14) après le traitement thermique de la dernière couche de poudre (24) appliquée à une température à laquelle l'élément structural (12) conserve sa forme.

6. Procédé selon l'une des revendications 1 à 5, le mélange de la deuxième partie (32) de la poudre de matière plastique (20) avec l'additif (36) à la poudre de matière plastique (20) étant chauffé à une température de 140 °C à 190 °C et de préférence de 160 °C à 180 °C.

7. Procédé selon l'une des revendications 1 à 6, l'additif (36) étant ajouté dans un état liquide à la deuxième partie de la poudre de matière plastique (20) dans le dispositif de mélange (34), notamment pulvérisé sur la deuxième partie (32) de la poudre de matière plastique (20).

8. Procédé selon l'une des revendications 1 à 6, l'additif (36) étant ajouté dans un état solide à la deuxième partie de la poudre de matière plastique (20) dans le dispositif de mélange (34).

9. Procédé selon la revendication 8, l'additif (36) étant broyé avant l'ajout à la deuxième partie (32) de la poudre de matière plastique (20) de telle sorte qu'un diamètre de particules moyen de 50 µm à 200 µm est supposé.

10. Procédé selon l'une des revendications 1 à 9, le mélange étant effectué au moyen d'un mouvement du mélange ou au moyen du tourbillonnement du mélange.

11. Procédé selon l'une des revendications 1 à 10, l'additif (36) étant ajouté dans une part de 0,05 % massique à 10,0 % massiques rapportée à la deuxième partie de la poudre de matière plastique (20).

12. Procédé selon l'une des revendications 1 à 11, la poudre de matière plastique (20) comprenant au moins un polymère, le polymère étant un polyamide aliphatique, un polyamide partiellement aromatique ou un copolyamide.

13. Procédé selon la revendication 12, le polyamide étant au moins un élément choisi dans le groupe composé du polyamide 6, polyamide 11, polyamide 12, polyamide 4.6, polyamide 4.10, polyamide 6.10, polyamide 10.10, polyamide 6.6, polyamide 6T/66, polyamide 6/6T et leurs copolymères.

14. Procédé selon l'une des revendications 1 à 13, l'additif (36) étant formé pour raccourcir les chaînes moléculaires de la deuxième partie (32) de la poudre de matière plastique (20) de telle sorte qu'au moins 80 % des chaînes moléculaires raccourcies présentent une longueur qui n'est pas supérieure de plus de 20 %, et de préférence pas supérieure de plus de 10 %, à la longueur des chaînes moléculaires de la poudre de matière plastique (20) dans un état neuf.

15. Procédé selon l'une des revendications 1 à 14, l'échauffement des couches de poudre (24) appliquées à la température de processus s'effectuant par chauffage de la chambre de processus (14).
